# EUROPÄISCHE PATENTANMELDUNG

(11) **EP 2 012 098 A1**
(43) Veröffentlichungstag der Anmeldung: **07.01.2009**
(21) Anmeldenummer: 08104109.7
(22) Anmeldetag: 27.05.2008
(51) Int. Cl.: G01F 23/284

(54) **Sensor nach dem TDR-Prinzip mit einer koaxialen Sonde und Herstellungsverfahren dafür**

(30) Priorität: 03.07.2007 DE 102007030847
(71) Anmelder: SICK AG, 79183 Waldkirch (DE)
(72) Erfinder: Bletz, Achim, 26260, Clérieux (FR)
(74) Vertreter: Ludewigt, Christoph

(57) **Zusammenfassung**

Es wird ein Sensor (10) nach dem TDR-Prinzip mit einer koaxialen Sonde (24) angegeben, die einen Innenleiter (28) und einen Außenleiter (26) zur Führung eines elektromagnetischen Pulses, insbesondere eines Mikrowellenpulses aufweist, mit einem Sender (38) und einem Empfänger (40) zum Aussenden und Empfangen des Pulses an einem Ende der Sonde (24), sowie mit einer Steuerung (22), welche dafür ausgebildet ist, die Entfernung einer Grenzfläche (18) anhand der Laufzeit des in der Sonde (24) geführten und an der Grenzfläche (18) reflektierten Pulses zu bestimmen. Dabei ist an dem anderen Ende der Sonde (24) ein Abschlusselement (30) vorgesehen, welches den Innenleiter (28) und den Außenleiter (26) über ein induktives Element (34) elektrisch verbindet.

## Beschreibung

Die Erfindung betrifft einen Sensor nach dem TDR-Prinzip mit einer koaxialen Sonde nach dem Oberbegriff von Anspruch 1, die Verwendung des Sensors als Füllstandssensor sowie ein Herstellungsverfahren für den Sensor.

Das TDR-Messprinzip (time domain reflectometry) basiert auf der Bestimmung von Laufzeiten eines elektromagnetischen Pulses, zur Bestimmung des Abstandes einer Diskontinuität des Leitungswellenwiderstandes wie etwa eines Kabelbruchs oder einer Produktgrenzfläche. Es ähnelt somit dem Radar, wobei der Unterschied darin besteht, dass die elektromagnetischen Wellen nicht ins Freie abgestrahlt, sondern entlang eines Leiters geführt werden. Eine der ältesten Anwendungen des TDR-Prinzips ist die Lokalisierung von Brüchen in Überseeleitungen.

Ein herkömmliches Einsatzgebiet für Sensoren, die auf dem TDR-Prinzip beruhen, ist die Bestimmung von Füllständen. Dabei wird ein elektromagnetischer Puls entlang eines Leiters ausgesandt, wobei der Puls durch die Änderung der dielektrischen Konstante zwischen verschiedenen Medien in einem Behälter teilweise reflektiert wird und es dadurch möglich ist, über eine Laufzeitmessung den Abstand zwischen Grenzfläche und Sensor zu ermitteln und somit den Füllstand zu berechnen.

Bei derartigen Füllstandssensoren wird noch zwischen offenen Sonden und geschlossenen Sonden unterschieden. Die erstgenannten bestehen aus einem einfachen Leiter und nutzen die Umgebung als Gegenpol der Sondenkopplung. Das Einsatzgebiet solcher Sensoren ist daher auf Behälter aus leitendem Material beschränkt. Vor allem im oberen Bereich des Behälters hängt die Wellenausbreitung in erheblichem Maße von der Geometrie des Behälters ab und beeinträchtigt so die Messgenauigkeit des Sensors.

Geschlossene Sonden dagegen bestehen aus einem koaxialen Leiter, der selbst seinen Innenleiter und Außenleiter mitbringt. In diesem Fall wird die Mikrowelle von dem koaxialen Leiter geführt, womit der Sensor unabhängig von dem Behälter wird, in dem er eingesetzt ist. Allerdings ist hier die Voraussetzung, dass die zu messenden Flüssigkeiten innerhalb des koaxialen Leiters denselben Pegelstand aufweisen wie in dem Behälter. Die hierfür bekannten Lösungen zum Flüssigkeitsaustausch zwischen Innenraum des koaxialen Leiters und dem Behälter sind unbefriedigend. Dabei werden nämlich in den tubusförmigen Außenleiter Löcher eingebracht (gestanzt, gebohrt etc.), welche dann durch den Verbleib von Bearbeitungsrückständen die Öffnungen verändern und so den Wellenwiderstand der Sonde und somit die Messung selbst stören. Schließlich ist die entsprechende Bearbeitung des Außenleiters mit großem Aufwand verbunden.

Ein weiteres Problem mit koaxialen Sonden besteht darin, dass der Innenleiter und der Außenleiter voneinander elektrisch getrennt bleiben müssen. Die bekannten mechanischen Lösungen, um diese Trennung mechanisch sicherzustellen, verändern aber ebenfalls in störender Weise das elektromagnetische Verhalten der Sonde.

Unabhängig von dem Sondentyp wird bei TDR-Sensoren durch die starke Wellenwiderstandsänderung des Sondenendes dem Messsignal ein starkes Störsignal überlagert. Ein Messsignal in der Nähe des Sondenendes geht so teilweise oder vollständig verloren, so dass also eine Totzone besteht. Niedrige Füllstände in einem Behälter lassen sich damit nicht messen, was umso störender wird, je kleiner der Behälter ist. Eine theoretische Möglichkeit, die Totzone zu verringern, besteht in der Anbringung eines Widerstands am Ende der koaxialen Sonde. Die Möglichkeit der Wellenanpassung unterdrückt den Störimpuls des Sondenendes und verringert somit das Artefakt.

Der Widerstand und seine Verbindungen mit der Sonde müssen den Beanspruchungen etwa durch eine umspülende Flüssigkeit standhalten. Vor allem aber muss der Widerstand sehr gutes Hochfrequenzverhalten aufweisen, damit die Anpassung tatsächlich stattfindet. Die Anforderungen der Anpassung werden mit steigender Bandbreite (Arbeitsfrequenz) zunehmend schwieriger. Da eine weitere Möglichkeit zur Verringerung der Totzone darin besteht, eben diese Arbeitsfrequenz zu erhöhen, um steilere Pulse zu erhalten, die sich besser differenzieren lassen, ist eine derartige Lösung mit einem oder auch mehreren parallelen Widerständen nur theoretisch durchführbar.

Angesichts all dieser Nachteile ist Aufgabe der Erfindung, einen Sensor nach dem TDR-Prinzip anzugeben, der unabhängig von der Geometrie der Umgebung und insbesondere einer Behältergeometrie zuverlässig genaue Messergebnisse liefert.

Diese Aufgabe wird durch einen Sensor gemäß Anspruch 1 gelöst. Dabei wird einem Sensor mit einer koaxialen Sonde ein Abschlusselement zugeordnet, welches den Innenleiter und den Außenleiter über ein induktives Element elektrisch verbindet. Der Effekt dieses induktiven Elements ist, dass der Artefaktpuls am Sondenende durch den induktiven Widerstand verzögert wird. Ein Messpuls in der Nähe des Sondenendes dagegen erreicht das induktive Element nicht und wird daher auch nicht von diesem verzögert. Somit ergibt sich eine zeitliche Entkoppelung, die es möglich macht, die Totzone ganz erheblich zu verringern. Die Sonde ist somit aus Sicht der elektromagnetischen Signale virtuell verlängert, so dass die tatsächliche Länge der Sonde vollständig oder nahezu vollständig als Messbereich ausgenutzt werden kann. Der Vorteil der erfindungsgemäßen Sonde besteht somit in der erweiterten Einsatzmöglichkeit bei beliebigen Außengeometrien sowie in genaueren Messergebnissen.

Vorteilhafterweise ist dabei mindestens ein Abstandselement insbesondere aus PTFE oder PBT vorgesehen, welches über den gesamten Verlauf der Sonde den Innenleiter von dem Außenleiter beabstandet hält. Damit wird eine Veränderung der Wellenübertragung durch Annäherung des Innenleiters an den Außenleiter und im Extremfall ein elektrischer Kurzschluss zuverlässig vermieden. Die angegebenen Materialien eignen sich sowohl aufgrund ihrer elektromagnetischen Eigenschaften als auch ihrer mechanischen Widerstandsfähigkeit gegenüber Belastungen durch die Flüssigkeiten, von denen sie umspült werden.

Dabei umfasst bevorzugt das Abstandselement ein kleines Winkelsegment, insbesondere kleiner 45°, des Umfangs der Sonde und weist einen oder mehrere Vorsprünge auf, welche den Außenleiter und/oder den Innenleiter in einem größeren Winkelsegment umgreifen und/oder das Abstandselement sich in einem Winkelstück mit reduzierter Feldstärke befindet. Auf diese Weise ist der Bereich klein gehalten, in dem das Abstandselement die Ausbreitung der elektromagnetischen Wellen beeinflusst. Insbesondere vorteilhaft ist es, dass sich das Abstandselement in einem Winkelsegment der Sonde befindet, in dem die Feldstärke des Messpulses klein ist. Die Vorsprünge oder Haken der Abstandselemente sorgen trotz der kleinen Geometrie der Abstandselemente an sich für einen stabilen mechanischen Halt. Das Abstandselement beeinflusst das Feld nur geringfügig, wenn es in einem Winkelstück mit reduzierter Feldstärke liegt, und sorgt somit für eine möglichst geringe Änderung der Messwerte.

Vorteilhafterweise weist das induktive Element eine Spule oder eine Spiralfeder auf. Beides lässt sich einfach in das Abschlusselement integrieren und mit der gewünschten Induktivität herstellen.

Bevorzugt weist das Abschlusselement ein kapazitives Element auf, insbesondere eine Wellensicherungsscheibe, welche mit der Sonde verbunden oder auf den Innenleiter aufgeschnappt ist. Eine Wellensicherungsscheibe bzw. Haltescheibe lässt sich leicht in das mechanische Konzept der Sonde integrieren, und die zusätzliche Kapazität sorgt für eine weitere Signaloptimierung, welche das Signal vor dem Artefakt des Sondenendes einebnet und damit die Unterscheidung zwischen Artefakt und Messpuls weiter vereinfacht.

In einer bevorzugten Ausführungsform ist das Abschlusselement zugleich als Abstandselement ausgebildet, insbesondere als Spiralfeder, welche sowohl die mechanischen als auch die induktiven Eigenschaften des Abschlusselements erzeugt. Das Abschlusselement erhält somit eine Doppelfunktion, unterstützt die mechanische Stabilität der Sonde und macht insbesondere bei kurzen Sonden zusätzliche Abstandselemente sogar überflüssig.

Vorteilhafterweise weist der Außenleiter Öffnungen auf, insbesondere längliche Schlitze, um eine Flüssigkeitsaustausch zu ermöglichen, und die Oberflächen des Außenleiters sind auch im Bereich der Öffnungen glatt. Damit wird sichergestellt, dass der gemessene Pegelstand innerhalb der Sonde dem zu bestimmenden äußeren Pegelstand entspricht, sogar noch bei mehreren Flüssigkeitsphasen, wie z. B. Öl auf Wasser. Eine glatte Oberfläche ohne Stanzgrate bzw. Bearbeitungsrückstände erleichtert diesen Flüssigkeitsaustausch und verringert elektromagnetische Beeinflussung durch die Schlitze.

Dabei weist der Außenleiter besonders bevorzugt einen polygonalen Querschnitt sowie eine Verbindungslinie, insbesondere eine Schweißnaht, über die Länge der Sonde auf. Ein solcher Außenleiter ist besonders einfach und kostengünstig herzustellen.

In einer bevorzugten Weiterbildung der Erfindung sind die Abstandselemente in Öffnungen des Außenleiters angeordnet, insbesondere jeweils paarweise von gegenüberliegenden Seiten in Umfangsrichtung der Sonde. Bei dieser Anordnung wird der Innenleiter in Position gehalten, obwohl die Abstandselemente den Innenleiter nicht komplett umgreifen, sondern einen Großteil des Innenleiters frei ist und direkten Kontakt zum Messmedium herstellen kann. Signaltechnisch werden also die Abstandselemente unsichtbar und ermöglichen damit eine genauere und zuverlässigere Messung.

Vorteilhafterweise ist die Sonde unmittelbar mit einer Platine der Steuerung verbunden. Diese Direktverbindung erspart eine aufwändige hochfrequenztaugliche Tankdurchfüh rung und deren Verbindung und sorgt somit für einen kompakteren, weniger anfälligen und kostengünstigeren Aufbau.

Dabei weist die Verbindung zwischen Sonde und Platine bevorzugt Soft Pads auf, die insbesondere kreisförmig entsprechend dem Umfang der Sonde auf der Platine angeordnet sind. Die Verbindung kann somit schon bei der Bestückung der Platine vorbereitet werden. Die Anbringung der Sonde erfordert nur einen einfachen Herstellungsschritt und verringert somit den Aufwand.

Ein besonders wichtiges Anwendungsgebiet des erfindungsgemäßen Sensors ist dasjenige als Füllstandssensor gemäß Anspruch 12. Aufgrund der verringerten Totzone ist es möglich, die Sonde auch in kleinen Behältern einzusetzen und niedrige Pegelstände zu messen. Da die Sonde koaxial ist, sind die Messergebnisse unabhängig von der Behältergeometrie.

Das erfindungsgemäße Herstellungsverfahren gemäß Anspruch 13 ermöglicht eine besonders kostengünstige Herstellung und vermeidet die störenden Effekte von Stanzgraten. Damit ist ein besonders guter Flüssigkeitsaustausch zwischen Innenraum der Sonde und Behälter gewährleistet. Die derart hergestellte Sonde weist weiterhin die bereits im Zusammenhang mit Anspruch 1 beschriebene verringerte Totzone auf.

Das Herstellungsverfahren kann auf analoge Weise durch weitere Merkmale, wie die erfindungsgemäße Sonde, ausgestaltet werden und zeigt dabei ähnliche Vorteile. Derartige weitere Merkmale sind beispielhaft, aber nicht abschließend, in den sich an die unabhängigen Ansprüche anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine schematische Darstellung einer Ausführungsform des erfindungsgemäßen Sensors in Verwendung als Füllstandssensor;
- Fig. 2: ein Blockschaltbild der Steuerung des Sensors gemäß Figur 1;
- Fig. 3: einen beispielhaften Signalverlauf zur Erläuterung des TDR-Prinzips;
- Fig. 4: weitere beispielhafte Signalverläufe zur Erläuterung der erfindungsgemäß verringerten Totzone;
- Fig. 5: eine Querschnittdarstellung der Sonde einer Ausführungsform des erfindungsgemäßen Sensors mit einem Abstandselement;
- Fig. 6: einen Längsschnitt der Sonde gemäß Figur 5;
- Fig. 7: eine schematische Darstellung des Einsatzes des Sensors bei zwei Flüssigkeiten mit zwei Grenzschichten;
- Fig. 8a: eine Draufsicht auf das Ausgangsmaterial zur Herstellung der Sonde für einen erfindungsgemäßen Sensor;
- Fig. 8b: eine schematische dreidimensionale Darstellung der entstehenden Sonde gemäß Figur 8a; und
- Fig. 9a,b: eine Darstellung eines Abschlusselements gemäß einer Ausführungsform der Erfindung;

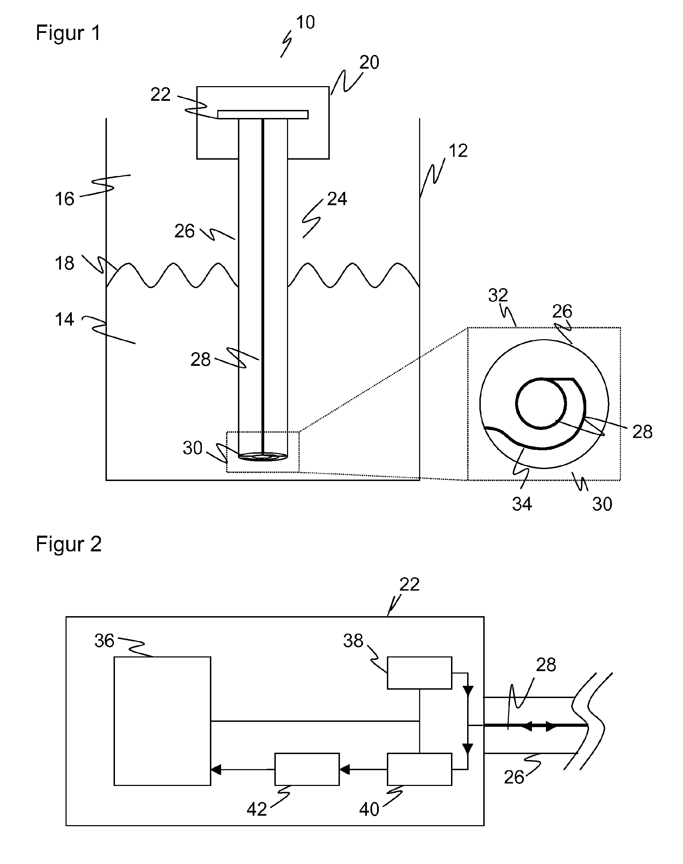

Figur 1 zeigt schematisch eine Ausführungsform des erfindungsgemäßen Sensors 10, der als Füllstandssensor in einem Behälter 12 mit einer Flüssigkeit 14 angebracht ist. Die Flüssigkeit 14 bildet gegenüber der Luft 16 eine Grenzfläche 18. Der Sensor 10 ist dafür ausgebildet, die Entfernung der Grenzfläche 18 zu ermitteln und daraus aus seiner bekannten Anbringungslage und der Geometrie des Behälters 12 den Füllstand der Flüssigkeit 14 abzuleiten. Obwohl die Ausbildung des Sensors 10 als Füllstandssensor ein sehr wichtiges Einsatzfeld ist, kann der Sensor 10 prinzipiell auch in anderen Gebieten eingesetzt werden, bei denen eine Grenzfläche zu lokalisieren ist. Dabei ist insbesondere an andere Grenzflächen 18 zu denken, beispielsweise zwischen verschiedenen Flüssigkeiten oder Granulaten.

Der Sensor 10 weist einen Sensorkopf 20 mit einer Steuerung 22 auf, die vorzugsweise auf einer gemeinsamen Platine untergebracht ist. An dieser Platine mit der Steuerung 22 ist unmittelbar eine koaxiale Sonde 24 angebracht, welche einen Außenleiter 26 und einen Innenleiter 28 aufweist. Die Verbindung der beiden Leiter 26, 28 der koaxialen Sonde 24 mit der Platine der Steuerung 22 erfolgt unmittelbar durch einen auf die Platine gelöteten Pin und einer passenden Buchse, der in Presspassung mit einem Sackloch des Innenleiters 26 gebracht wird, sowie über kreisförmig angeordnete sogenannte Soft Pads (GORE Komponenten), welche die Platine mit dem Außenleiter 26 niederohmig verbindet. Durch die kreisförmige Anordnung und die direkte Ankopplung des Aussenleiters mit der Leiterkarte bzw. Platine wird eine reflexionsarme Verbindung zwischen Außenleiter 26 und Platine 22 der Steuerung geschaffen. Die Soft Pads können dabei zumindest eine gewisse mechanische Toleranz aufnehmen.

An dem Sensorkopf 20 gegenüberliegendem Ende der Sonde 24 ist ein Abschlusselement 30 vorgesehen, welches zur besseren Übersicht in einem Ausschnitt 32 nocheinmal vergrößert und in Draufsicht dargestellt ist. In diesem Ausschnitt 32 bezeichnen wie auch in allen übrigen Figuren gleiche Bezugszeichen gleiche Merkmale. Das Abschlusselement 30 verbindet den Innenleiter 28 mit dem Außenleiter 26 elektrisch über eine Spiralfeder 34. Dadurch weist diese elektrische Verbindung eine Induktivität auf.

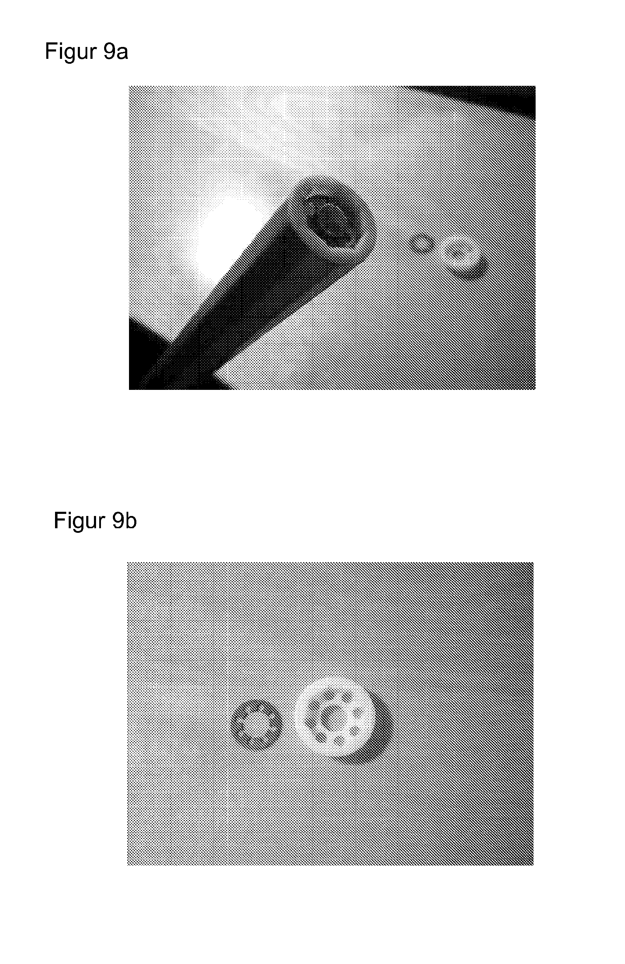

Alternativ kann in der elektrischen Verbindungen auch eine übliche Spule oder ein sonstiges induktives Element eingesetzt sein. Die Spiralfeder 34 schafft nicht nur eine elektrische Verbindung, sondern sorgt durch eine mechanische Festigkeit auch dafür, dass der Innenleiter 28 von dem Außenleiter 26 zentrisch beabstandet ist. Zusätzlich zu dem induktiven Element 34 kann in dem Abschlusselement 30 auch ein Element mit kapazitivem Verhalten vorgesehen sein. Ein solches Element kann beispielsweise durch eine auf dem Innenleiter aufgebrachte Federscheibe realisiert sein. Ein Beispiel für ein Abschlusselement ist in den Figuren 9a und 9b dargestellt.

Die in dem Sensorkopf 20 vorgesehene Steuerung 22 beziehungsweise ihre Platine ist in Figur 2 in einem Blockschaltbild dargestellt. Die eigentliche Steuerung bildet ein Mikroprozessor 36, der auch ein FPGA, ASIC oder dergleichen sein kann, und eine Zeitbasisschaltung zur Ansteuerung eines Mikrowellensenders 38 und eines Mikrowellenempfängers 40. Die Ansteuerung der Sende- und Empfangseinheit lässt das reflektierte und am Innenleiter empfangene Messsignal zeitgedehnt am Ausgang des Mikrowellenempfängers erscheinen.

Über einen Verstärker 42 wird das zeitgedehnte Messsignal an den Mikroprozessor 36 zur Messsignalauswertung geleitet. Bevorzugt ist der Verstärker 42 in der Lage, sich auf den Signalpegel einzustellen und somit unter Ausnutzung der Auflösung des Analog - Digitalwandlers auch kleine Messsignale auswerten zu können.

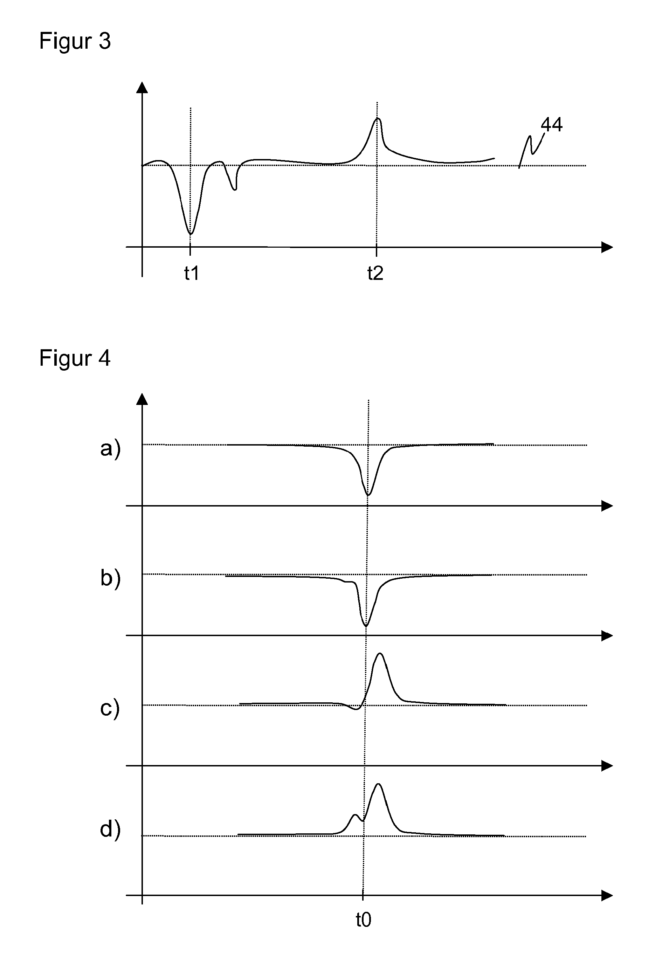

Figur 3 zeigt einen typischen Signalverlauf eines TDR-Sensorsignals. Dieses Signal repräsentiert die Veränderung des charakteristischen Wellenwiderstandes entlang der Sonde 24. Das Signal wird von dem Verstärker 42 dem Mikroprozessor 36 zugeführt und digitalisiert. Dabei wird zu einem Zeitpunkt t1 von dem Mikrowellensender 38 ein Puls ausgesandt und auf den Innenleiter 28 der Sonde eingekoppelt. Der optimierte aber nicht perfekte Übergang zwischen Innenleiter 28 und Leiterkarte 22 verursacht unmittelbar nach t1 ein Störsignal, welches sich jedoch zeitlich noch "oberhalb" der eigentlichen Messsonde befindet und so für die Signalauswertung keine wirkliche Störung darstellt. Zu einem späteren Zeitpunkt t2 erreicht den Mikrowellenempfänger 40 ein Reflexionspuls, der von dem Sprung in den Dielektrizitätskonstanten von Luft 16 zu Flüssigkeit 14 an der Grenzfläche 18 herrührt.

Aufgrund der praktisch konstanten Ausbreitungsgeschwindigkeit des elektromagnetischen Pulses in Gasen besteht eine feste Beziehung zwischen dem zeitlichen Verlauf des Signals und tatsächlichen Distanzen längs der Sonde 24. Der Abstand von dem Sensorkopf 20 zu der Grenzfläche 18 kann also direkt aus der Zeitdifferenz zwischen dem ausgesandten Puls und dem von der Grenzfläche 18 reflektierten Puls aus der Differenz t2-t1 berechnet werden. Bei bekannter Geometrie des Behälters 12 und der Position des Sensorkopfes 20 kann daraus auf den Füllstand geschlossen werden. Der Zeitdehnungsfaktor der Auswerteelektronik kann hierbei als völlig konstant betrachtet werden.

Die Steuerung 22 muss dabei die Aufgabe lösen, die Zeiten t1 und t2 anhand der Extrema zu bestimmen. In der realen Anwendung kann der Signalverlauf deutlich von dem in Figur 3 dargestellten typischen Signalverlauf abweichen, so dass die Bestimmung der Extrema in den bekannten Umsetzungen zunächst eine Bestimmung eines Grundsignalpegels 44 erfordert. Gegenüber diesem Grundsignalspegel 44 wird dann das Minimum bei t1 und das Maximum bei t2 bestimmt. Um eine Bestimmung des unter anderem auch temperaturabhängigen Grundsignalpegels 44 zu vermeiden, ist es auch möglich, die Extrema anhand ihrer steigenden und fallenden Flanken zu identifizieren.

Das Abschlusselement 30 ist erfindungsgemäß vorgesehen, um die Ausbildung einer Totzone am unteren Ende der Sonde 24 zu verringern oder zu vermeiden. Dies wird im Folgenden anhand verschiedener in Figur 4 dargestellter Signalverläufe erläutert. Dabei zeigen Figuren 4a und 4b herkömmliche Signalverläufe, während die Figuren 4c und 4d Signalverläufe mit einem Abschlusselement 30 und einer zwischengeschalteten Induktivität illustrieren.

Im Unterschied zu herkömmlichen Lösungen versucht die Erfindung nicht, das Artefakt eines Pulses am Ende der Sonde 24 zu vermeiden, sondern verschiebt dieses Artefakt zeitlich nach hinten, so dass es nicht oder zumindest weniger mit dem eigentlichen Messpuls von der Grenzfläche 18 überlagert. Das Ausmaß der zeitlichen Verschiebung hängt dabei von der Induktivität ab und kann etwa durch die Länge der Spiralfeder 34 beeinflusst werden. Auf diese Weise wird die Sonde 24 virtuell verlängert, so dass die gesamte reale Länge für Messungen zur Verfügung steht.

Figur 4a zeigt zum Vergleich den Signalverlauf eines Empfangspulses bei einer offenen Sonde 24, wenn also kein Abschlusselement 30 vorgesehen ist. Dieser Empfangspuls wird im Folgenden als Artefakt bezeichnet. Das Minimum des Artefakts bildet der Bezugszeitpunkt t0, welcher dem Ende der Sonde 24 entspricht. In Figur 4b überlagert ein positiver Messpuls, der zu einer Reflexion einer Grenzfläche 18 mit geringem Wellenwiderstandssprung gehört, die linke Flanke des Artefakts. Die Steuerung 22 wäre nicht in der Lage, diesen Messpuls von Rauschen zu unterscheiden und könnte den niedrigen Füllstand daher nicht messen.

Figur 4c ist das Pendant zu Figur 4a, wobei das Ende der Sonde 24 mit dem Abschlusselement 30 verschlossen ist, so dass also eine Induktivität zwischen Außenleiter 26 und Innenleiter 28 geschaltet ist. Die Reflexion an dem Abschlusselement 30 ist im Gegensatz zu der offenen Sonde 24 der Figuren 4a und 4b zeitlich verzögert und ergibt einen ausgeprägten Peak mit umgekehrtem Vorzeichen. Links davon ist noch ein kleiner Überrest des Artefakt zu erkennen. In Figur 4d, dem Pendant zu Figur 4b, ist der Messpuls zwar immer noch mit dem verzögerten Artefakt überlagert, bildet aber selbst einen deutlich ausgeprägtem Peak, den die Steuerung 22 erkennen kann. Durch die zeitliche Verzögerung des Artefakts wird damit auch ein niedriger Pegelstand messbar. Die Totzone kann demnach durch Wahl der Induktivität verkleinert oder sogar vermieden werden.

Wenn in dem Abschlusselement 30 ein mechanisches Element wie eine Wellensicherungsscheibe um den Innenleiter 28 vorgesehen ist, so wirkt diese als Kapazität und optimiert die Signalform weiter. Alternativ kann auch ein anderes kapazitives Element vorgesehen sein. Die Kapazität bewirkt, den Signalverlauf vor dem verzögerten Artefakt einzuebnen. Mit anderen Worten verschwindet der residuelle linke negative Puls in Figur 4c, so dass die Signalqualität noch weiter verbessert und die Unterscheidbarkeit zwischen Messsignal und Artefakt erleichtert wird.

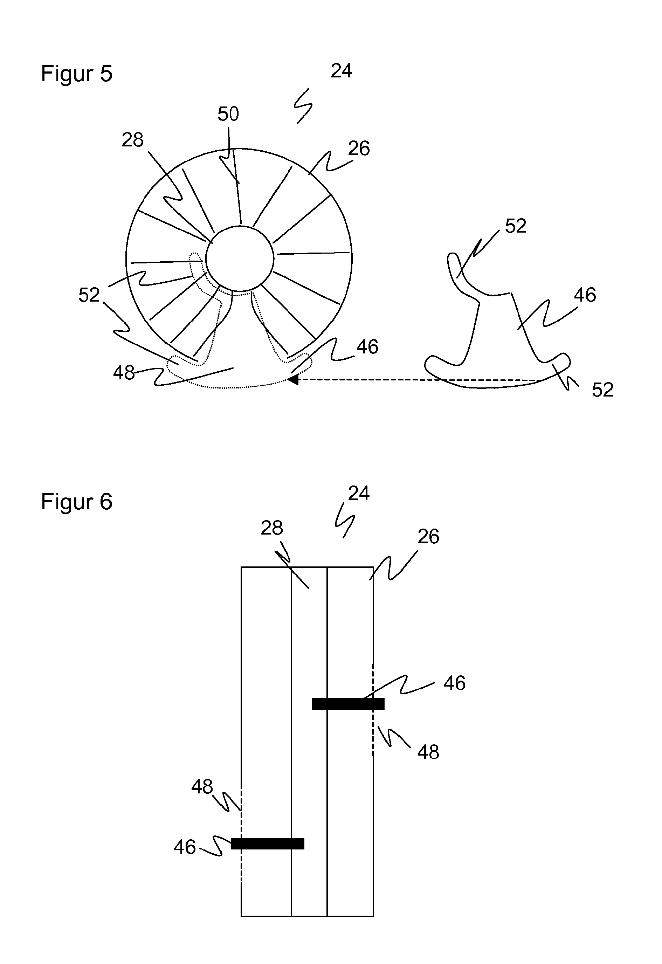

Anhand des Querschnitts der Figur 5 und des Längsschnitts der Figur 6 wird nachfolgend eine Weiterbildung der erfindungsgemäßen Sonde 24 beschrieben. Je länger die Sonde 24 wird, umso mehr erhöht sich die Wahrscheinlichkeit, dass durch Biegung, vor allem des Innenleiters 28, die Wellenleitungseigenschaften verändert werden. Um dies zu verhindern, sind Abstandselemente 46 vorgesehen, welche den Innenleiter 28 gegenüber dem Außenleiter 26 zentrieren.

Diese Abstandselemente 46 verändern aber selbst auch die Wellenleitungseigenschaften der Sonde 24. Daher wird als Material der Abstandselemente 46 eines mit einer möglichst geringen Dielektrizitätskonstanten verwendet, beispielsweise Polytetrafuorethylen (PTFE, Teflon) oder Polybutylenterephthalat (PBT).

Erfindungsgemäß wird der durch die geänderten Wellenleitungseigenschaften eingeführte Fehler verringert oder verhindert, indem mehrere oder ein durchgehendes Abstandselement verwendet wird. Dadurch ist das Material der Abstandselemente und der dadurch eingeführte Fehler verteilt, im Falle eines durchgehenden Abstandselementes verschwindet er ganz.

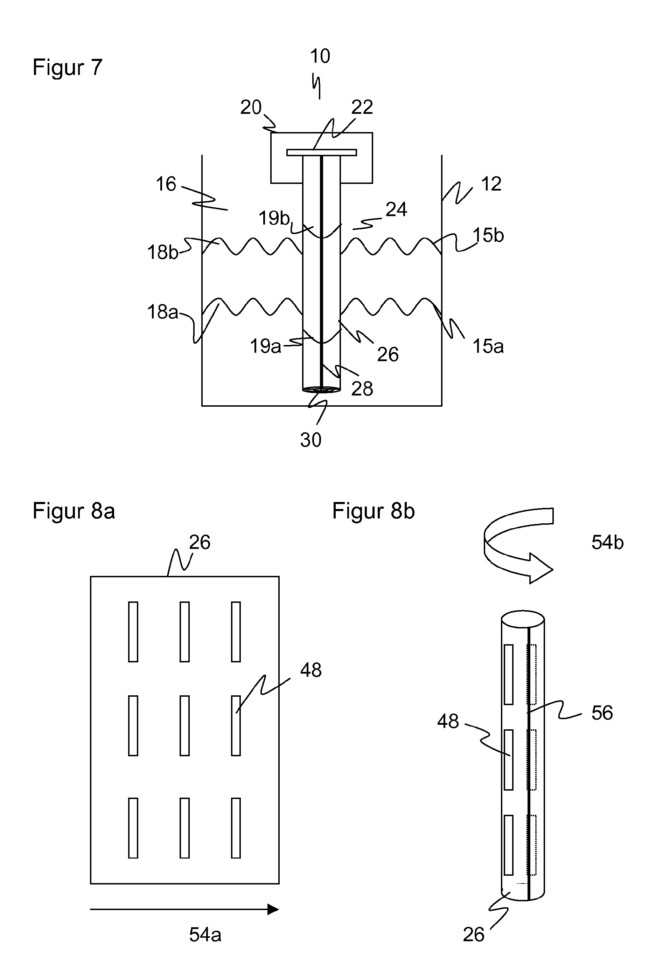

Der Außenleiter 26 weist längliche Schlitze oder Öffnungen 48 auf, welche einen Flüssigkeitsaustausch zwischen dem Innenraum der Sonde 24 und dem Behälter 12 ermöglicht. Dies wird im Zusammenhang mit den Figuren 7 und 8 später noch genauer erklärt. Das Abstandselement 46 (durchgezogene Linie) wird durch diese Öffnung 48 in den Außenleiter 26 eingeführt (gestrichelte Linie) und zentriert somit den Innenleiter 28.

Die radialen Feldlinien 50 skizzieren das entstehende elektromagnetische Feld. Da das Abstandselement 46 nur einen kleinen Teilbereich des gesamten Innenraum des Au-ßenleiters 26 füllt, also nur ein kleines Winkelsegment insbesondere kleiner 45° umfasst, bleibt die Störung des Feldes sehr gering. Außerdem befindet sich das Abstandselement in einem Winkelsegment der Sonde, in dem das elektromagnetische Feld reduziert ist und so nur in sehr geringem Maße ein Störsignal bewirkt. Das Feld ist deshalb in diesem Winkelabschnitt besonders schwach, weil hier die von dem Innenleiter kommenden Feldlinien seitlich zu den Kanten des Aussenleiters weggeführt werden. Um die Stabilität an dem Innenleiter 28 zu vergrößern, umgreift ein schmaler hakenartiger Vorsprung oder Haken 52 den Innenleiter 28 in einem größeren Winkelbereich. Da der Haken 52 des Abstandselements 46 aus nur sehr wenig Material besteht, ist der hierdurch eingeführte Messfehler vernachlässigbar. Entsprechende Haken 52 stabilisieren das Abstandselement 46 auch an dem Außenleiter 26.

Werden mehrere derartige Abstandselemente 46 jeweils in Umfangsrichtung versetzt angeordnet, so gewährleisten sie nicht nur die mechanische Stabilität in allen radialen Richtungen. Eine einfache derartige Konfiguration ist in Figur 6 dargestellt, bei der zwei gegenüberliegende Abstandselemente 46 den Innenleiter 28 zentrieren. Erfindungsgemäß ist es daher möglich, die mechanische Stabilität der Sonde 24 zu gewährleisten, ohne dass dadurch ein signifikanter Messfehler eingeführt wird.

In Figur 7 ist eine Schwierigkeit der Messung des Gegenstandes von Flüssigkeiten illustriert. Voraussetzung für eine genaue Messung ist nämlich, dass innerhalb der Sonde 24 der Pegelstand demjenigen innerhalb des Behälters 12 entspricht. In dem dargestellten Beispiel sind zwei Flüssigkeiten, nämlich Wasser 15a und Öl 15b in dem Behälter 12 übereinandergeschichtet. Dadurch entsteht eine Grenzfläche 18a zwischen dem Wasser 15a und dem Öl 15b und eine weitere Grenzfläche 18b zwischen dem Öl 15b und der Luft 16. Durch unzureichenden Flüssigkeitsaustausch zwischen Behälter 12 und Sonde 24 sowie durch Kapillareffekte kann der innere Pegelstand des Wassers 19a und der innere Pegelstand 19b des Öls von demjenigen in dem Behälter 12 abweichen.

Um dies zu verhindern, weist der Außenleiter 26 eine Anzahl länglicher Schlitze oder Öffnungen auf. In einem fertigen tubusförmigen Außenleiter 26 lassen sich solche Schlitze 48 nicht ohne Weiteres anbringen. Außerdem würde beim Stanzen ein innerer Stanzgrat übrig bleiben, welcher Flüssigkeitsaustausch wie Wellenausbreitung behindert.

Erfindungsgemäß wird daher der Außenleiter 26 aus einem flächigen Ausgangsmaterial, etwa einem Metallblech, hergestellt, wie es in Figur 8a dargestellt ist. In diesem flächigen Material werden Öffnungen 48 angebracht, beispielsweise durch Stanzen oder Laserschneiden. Da beide Oberflächen noch flach sind, entstehen keine Stanzgrate, oder sie können zumindest eingeebnet werden, was auf der Innenseite eines tubusförmigen Außenleiters nicht möglich wäre. Die Öffnungen 48 können in einem regelmäßigen oder unregelmäßigen Muster angebracht werden. In Anzahl und Größe ist zwischen mechanischer Stabilität, Flüssigkeitsaustausch und Störung der Wellenausbreitung abzuwägen. Die dargestellte regelmäßige Anordnung ist also nur beispielhaft zu verstehen.

In einem weiteren Verarbeitungsschritt wird das flächige Ausgangsmaterial wie durch Pfeile 54a und 54b angedeutet röhrenartig zusammenfaltet oder gerollt. Die einfachere Verarbeitung gegenüber einem regelmäßigen Rollen ist eine mehrfache Faltung. Dabei entsteht ein Rohr, welches die Form eines Prismas mit polygonalem Querschnitt hat. Vorzugsweise ist als Polygon ein regelmäßiges Vieleck, beispielsweise mit zehn Ecken, zu wählen, um einen Kreis anzunähern. Es ist aber alternativ auch möglich, das Ausgangsmaterial beispielsweise um einen zylinderförmigen Kern zu rollen und damit ein Zylinderrohr zu erhalten. Das entstehende Rohr wird in Längsrichtung an den sich berührenden Außengrenzen 56 beispielsweise durch Verschweißen verbunden.

Nach Einführen des Innenleiters 28 kann einerseits das Abstandselement 30 aufgesetzt werden, so dass Innenleiter 28 und Außenleiter 26 über das induktive Element 34 verbunden sind. Auf der gegenüberliegenden Seite wird die Sonde 24 in den Sensorkopf 20 eingeführt und kontaktiert die Soft Pads der Platine der Steuerung 22, beziehungsweise der Innenleiter 28 kontaktiert die vorgesehene Buchse dieser Platine. Diese Direktkontaktierung spart Hochfrequenzleitungen zwischen der Sonde 24 und der Platine ein.

## Patentansprüche

1. Sensor (10) nach dem TDR-Prinzip mit einer koaxialen Sonde (24), die einen Innenleiter (28) und einen Außenleiter (26) zur Führung eines elektromagnetischen Pulses, insbesondere eines Mikrowellenpulses aufweist, mit einem Sender (38) und einem Empfänger (40) zum Aussenden und Empfangen des Pulses an einem Ende der Sonde (24), sowie mit einer Steuerung (22), welche dafür ausgebildet ist, die Entfernung einer Grenzfläche (18) anhand der Laufzeit des in der Sonde (24) geführten und an der Grenzfläche (18) reflektierten Pulses zu bestimmen, **dadurch gekennzeichnet, dass** an dem anderen Ende der Sonde (24) ein Abschlusselement (30) vorgesehen ist, welches den Innenleiter (28) und den Außenleiter (26) über ein induktives Element (34) elektrisch verbindet.

2. Sensor (10) nach Anspruch 1, **dadurch gekennzeichnet, dass** mindestens ein Abstandselement (46) insbesondere aus PTFE oder PBT vorgesehen ist, welches über den gesamten Verlauf der Sonde (24) den Innenleiter (28) von dem Außenleiter (26) beabstandet hält.

3. Sensor (10) nach Anspruch 2, **dadurch gekennzeichnet, dass** das Abstandselement (46) ein kleines Winkelsegment, insbesondere kleiner 45°, des Umfangs der Sonde (24) umfasst und einen oder mehrere Vorsprünge (52) aufweist, welche den Außenleiter (26) und/oder den Innenleiter (28) in einem größeren Winkelsegment umgreifen und/oder das Abstandselement (46) sich in einem Winkelstück mit reduzierter Feldstärke befindet.

4. Sensor (10) nach einem der vorhergehenden Ansprüche, **dadurch gekennzeichnet, dass** das induktive Element eine Spule oder eine Spiralfeder (34) aufweist.

5. Sensor (10) nach einem der vorhergehenden Ansprüche, **dadurch gekennzeichnet, dass** das Abschlusselement (30) ein kapazitives Element aufweist, insbesondere eine Wellensicherungsscheibe, die mit der Sonde (24) verbunden oder auf den Innenleiter (28) aufgeschnappt ist.

6. Sensor (10) nach einem der vorhergehenden Ansprüche, **dadurch gekennzeichnet, dass** das Abschlusselement (30) als Abstandselement ausgebildet ist, insbesondere als Spiralfeder (34), welche sowohl die mechanischen als auch die induktiven Eigenschaften des Abschlusselements (30) erzeugt.

7. Sensor (10) nach einem der vorhergehenden Ansprüche, **dadurch gekennzeichnet, dass** der Außenleiter (26) Öffnungen (48) aufweist, insbesondere längliche Schlitze, um einen Flüssigkeitsaustausch zu ermöglichen, und wobei die Oberflächen des Außenleiters (26) auch im Bereich der Öffnungen (48) glatt sind.

8. Sensor (10) nach Anspruch 7, **dadurch gekennzeichnet, dass** der Außenleiter (26) einen polygonalen Querschnitt sowie eine Verbindungslinie (56), insbesondere eine Schweißnaht, über die Länge der Sonde (24) aufweist.

9. Sensor (10) nach Anspruch 7 oder 8, **dadurch gekennzeichnet, dass** die Abstandselemente (46) in Öffnungen (48) des Außenleiters (26) angeordnet sind, insbesondere jeweils paarweise von gegenüberliegen Seiten in Umfangsrichtung der Sonde (24).

10. Sensor (10) nach einem der vorhergehenden Ansprüche, **dadurch gekennzeichnet, dass** die Sonde (24) unmittelbar mit einer Platine der Steuerung (22) verbunden ist.

11. Sensor (10) nach Anspruch 10, **dadurch gekennzeichnet, dass** die Verbindung zwischen Sonde (24) und Platine Soft Pads aufweist, die insbesondere kreisförmig entsprechend dem Umfang der Sonde (24) auf der Platine angeordnet sind.

12. Verwendung eines Sensors (10) nach einem der Ansprüche 1 bis 11 als Füllstandssensor in einem Behälter (12), in dem mindestens eine Flüssigkeit (14) eine Grenzfläche (18) bildet, zur Ermittlung des Füllstands der Flüssigkeit (14).

13. Herstellungsverfahren für einen Sensor (10) nach einem der Ansprüche 1 bis 11, welches die Herstellung der Sonde (24) gemäß folgender Schritte aufweist:
- Anbringen von Öffnungen (48) in ein flächiges Material für den Außenleiter (26) insbesondere durch Stanzen oder Laserschneiden;
- Mehrfaches Falten des Materials, um ein Prisma mit polygonalem Querschnitt zu erzeugen, oder Rollen des Materials, um einen Zylinder zu erzeugen;
- Verbinden der äußeren Kanten des Materials, um das Prisma oder den Zylinder zu schließen, insbesondere durch Verschweißen, und somit den Außenleiter (26) zu erhalten;
- Anordnen des Innenleiters (28) in dem Außenleiter (26) und Anbringen des Abschlusselement (30);
- Verbinden des Außenleiters (26) und des Innenleiters (28) über das induktive Element (34) des Abschlusselements (30).

14. Verfahren nach Anspruch 13, **dadurch gekennzeichnet, dass** mindestens ein Abstandselement (46) insbesondere aus PTFE oder PBT in den Öffnungen (48) des Außenleiters (26) angeordnet wird, insbesondere mehrere Abstandselemente (46) jeweils paarweise von gegenüberliegen Seiten in Umfangsrichtung der Sonde (24), um über den gesamten Verlauf der Sonde (24) den Innenleiter (28) von dem Außenleiter (26) beabstandet zu halten.

15. Verfahren nach Anspruch 13 oder 14, **dadurch gekennzeichnet, dass** Soft Pads auf einer Platine der Steuerung (22), insbesondere kreisförmig entsprechend dem Umfang der Sonde (24), angeordnet werden und die Sonde (24) mittels der Soft Pads unmittelbar mit der Platine verbunden wird.

## Geänderte Patentansprüche

### Geänderte Patentansprüche gemäss Regel 137(2) EPÜ.

**1.** Sensor (10) nach dem TDR-Prinzip mit einer koaxialen Sonde (24), die einen Innenleiter (28) und einen Außenleiter (26) zur Führung eines elektromagnetischen Pulses, insbesondere eines Mikrowellenpulses aufweist, mit einem Sender (38) und einem Empfänger (40) zum Aussenden und Empfangen des Pulses an einem Ende der Sonde (24), sowie mit einer Steuerung (22), welche dafür ausgebildet ist, die Entfernung einer Grenzfläche (18) anhand der Laufzeit des in der Sonde (24) geführten und an der Grenzfläche (18) reflektierten Pulses zu bestimmen, **dadurch gekennzeichnet, dass** an dem anderen Ende der Sonde (24) ein Abschlusselement (30) vorgesehen ist, welches den Innenleiter (28) und den Außenleiter (26) über ein induktives Element (34) elektrisch verbindet, damit ein Artefaktpuls an dem anderen Ende der Sonde (24) durch den induktiven Widerstand verzögert wird und somit die Sonde (24) für die elektromagnetischen Signale virtuell verlängert ist.

**2.** Sensor (10) nach Anspruch 1, **dadurch gekennzeichnet, dass** mindestens ein Abstandselement (46) insbesondere aus PTFE oder PBT vorgesehen ist, welches über den gesamten Verlauf der Sonde (24) den Innenleiter (28) von dem Außenleiter (26) beabstandet hält.

**3.** Sensor (10) nach Anspruch 2, **dadurch gekennzeichnet, dass** das Abstandselement (46) ein kleines Winkelsegment, insbesondere kleiner 45°, des Umfangs der Sonde (24) umfasst und einen oder mehrere Vorsprünge (52) aufweist, welche den Außenleiter (26) und/oder den Innenleiter (28) in einem größeren Winkelsegment umgreifen und/oder das Abstandselement (46) sich in einem Winkelstück mit reduzierter Feldstärke befindet.

**4.** Sensor (10) nach einem der vorhergehenden Ansprüche, **dadurch gekennzeichnet, dass** das induktive Element eine Spule oder eine Spiralfeder (34) aufweist.

**5.** Sensor (10) nach einem der vorhergehenden Ansprüche, **dadurch gekennzeichnet, dass** das Abschlusselement (30) ein kapazitives Element aufweist, insbesondere eine Wellensicherungsscheibe, die mit der Sonde (24) verbunden oder auf den Innenleiter (28) aufgeschnappt ist.

**6.** Sensor (10) nach einem der vorhergehenden Ansprüche, **dadurch gekennzeichnet, dass** das Abschlusselement (30) als Abstandselement ausgebildet ist, insbesondere als Spiralfeder (34), welche sowohl die mechanischen als auch die induktiven Eigenschaften des Abschlusselements (30) erzeugt.

**7.** Sensor (10) nach einem der vorhergehenden Ansprüche, **dadurch gekennzeichnet, dass** der Außenleiter (26) Öffnungen (48) aufweist, insbesondere längliche Schlitze, um einen Flüssigkeitsaustausch zu ermöglichen, und wobei die Oberflächen des Außenleiters (26) auch im Bereich der Öffnungen (48) glatt sind.

**8.** Sensor (10) nach Anspruch 7, **dadurch gekennzeichnet, dass** der Außenleiter (26) einen polygonalen Querschnitt sowie eine Verbindungslinie (56), insbesondere eine Schweißnaht, über die Länge der Sonde (24) aufweist.

**9.** Sensor (10) nach Anspruch 7 oder 8, **dadurch gekennzeichnet, dass** die Abstandselemente (46) in Öffnungen (48) des Außenleiters (26) angeordnet sind, insbesondere jeweils paarweise von gegenüberliegen Seiten in Umfangsrichtung der Sonde (24).

**10.** Sensor (10) nach einem der vorhergehenden Ansprüche, **dadurch gekennzeichnet, dass** die Sonde (24) unmittelbar mit einer Platine der Steuerung (22) verbunden ist.

**11.** Sensor (10) nach Anspruch 10, **dadurch gekennzeichnet, dass** die Verbindung zwischen Sonde (24) und Platine Soft Pads aufweist, die insbesondere kreisförmig entsprechend dem Umfang der Sonde (24) auf der Platine angeordnet sind.

**12.** Verwendung eines Sensors (10) nach einem der Ansprüche 1 bis 11 als Füllstandssensor in einem Behälter (12), in dem mindestens eine Flüssigkeit (14) eine Grenzfläche (18) bildet, zur Ermittlung des Füllstands der Flüssigkeit (14).

**13.** Herstellungsverfahren für einen Sensor (10) nach einem der Ansprüche 1 bis 11, welches die Herstellung der Sonde (24) gemäß folgender Schritte aufweist:
- Anbringen von Öffnungen (48) in ein flächiges Material für den Außenleiter (26) insbesondere durch Stanzen oder Laserschneiden;
- Mehrfaches Falten des Materials, um ein Prisma mit polygonalem Querschnitt zu erzeugen, oder Rollen des Materials, um einen Zylinder zu erzeugen;
- Verbinden der äußeren Kanten des Materials, um das Prisma oder den Zylinder zu schließen, insbesondere durch Verschweißen, und somit den Außenleiter (26) zu erhalten;
- Anordnen des Innenleiters (28) in dem Außenleiter (26) und Anbringen des Abschlusselement (30);
- Verbinden des Außenleiters (26) und des Innenleiters (28) über das induktive Element (34) des Abschlusselements (30), wobei das induktive Element dafür ausgebildet ist, einen Artefaktpuls an einem Ende der Sonde (24) durch den induktiven Widerstand zu verzögern und somit die Sonde (24) für elektromagnetische Signale virtuell zu verlängern.

**14.** Verfahren nach Anspruch 13, **dadurch gekennzeichnet, dass** mindestens ein Abstandselement (46) insbesondere aus PTFE oder PBT in den Öffnungen (48) des Außenleiters (26) angeordnet wird, insbesondere mehrere Abstandselemente (46) jeweils paarweise von gegenüberliegen Seiten in Umfangsrichtung der Sonde (24), um über den gesamten Verlauf der Sonde (24) den Innenleiter (28) von dem Außenleiter (26) beabstandet zu halten.

**15.** Verfahren nach Anspruch 13 oder 14, **dadurch gekennzeichnet, dass** Soft Pads auf einer Platine der Steuerung (22), insbesondere kreisförmig entsprechend dem Umfang der Sonde (24), angeordnet werden und die Sonde (24) mittels der Soft Pads unmittelbar mit der Platine verbunden wird.
